# EUROPÄISCHE PATENTSCHRIFT

(11) **EP 3 541 597 B1**
(45) Veröffentlichungstag und Bekanntmachung des Hinweises auf die Patenterteilung: **13.07.2022**
(21) Anmeldenummer: 17803783.4
(22) Anmeldetag: 15.11.2017
(51) Int. Cl.: B29C 48/17, B29C 48/31

(54) **KOEXTRUSION VON PERIODISCH MODULIERTEN STRUKTUREN**
COEXTRUSION OF PERIODICALLY MODULATED STRUCTURES
CO-EXTRUSION DE STRUCTURES PRÉRIODIQUEMENT MODULÉE

(30) Priorität: 18.11.2016 DE 102016013776
(43) Veröffentlichungstag der Anmeldung: 25.09.2019
(73) Patentinhaber: Giesecke+Devrient Mobile Security GmbH, 81677 München (DE)
(72) Erfinder: RIEDL, Josef, 85395 Attenkirchen (DE)
(74) Vertreter: Giesecke + Devrient IP
(86) Internationale Anmeldenummer: PCT/EP2017/001339
(87) Internationale Veröffentlichungsnummer: WO 2018/091140

(56) Entgegenhaltungen:
- WO-A1-2011/072818
- WO-A2-2009/153056
- DE-A1- 3 219 092
- DE-C2- 3 219 092
- FR-A- 1 384 293
- JP-A- S6 132 732
- US-A- 3 540 964
- US-A1- 2001 038 160
- US-A1- 2006 038 310
- US-A1- 2013 094 064
- US-A1- 2015 056 432

## Beschreibung

Die vorliegende Erfindung ist gerichtet auf ein Verfahren zum Herstellen einer Folie mit variabler Streifengeometrie, das es ermöglicht, eine Folie bereitzustellen, welche ein aufwendiges Sicherheitsmerkmal trägt. Die vorliegende Erfindung ist ferner gerichtet auf einen entsprechenden Datenträger bzw. ein Wertdokument, aufweisend die bereitgestellte Folie, sowie auf die Folie an sich. Ferner wird ein Extrudersystem vorgeschlagen zum Herstellen einer Folie mit variabler Streifengeometrie sowie ein Computerprogrammprodukt mit Steuerbefehlen, welche das vorgeschlagene Verfahren implementieren bzw. das vorgeschlagene Extrudersystem betreiben.

EP 2 736 729 B1 zeigt eine Datenträgerkarte mit einem eine oder mehrere Folien umfassenden Kartenkörper und einem in dem Kartenkörper integrierten Sicherheitsfaden, wobei zumindest eine der Folien durch Koextrusion hergestellt ist und wenigstens zwei in der Fläche nebeneinander liegende Streifen aufweist. Eine solche Folie mit alternierenden Streifen wird generell als Streifenfolie bezeichnet.

DE 195 04119 A1 zeigt einen allgemein bekannten Extruder, aufweisend einen Düsenkopf, welcher in einer Schienenführung einer zwischen Ausgang des Extruders und Düsenkopf angeordneten Zwischenplatte quer zum Kunststoffstrom längs verschiebbar gelagert und von der Zwischenplatte durch die Längsverschiebung abnehmbar ist. Die Längsverschiebung des Düsenkopfes dient der besseren Reinigungsmöglichkeit des Extruders.

EP 3 015 243 A1 zeigt, dass bei der Folien- oder Plattenherstellung mit einem Glättwerk die Folie oder Platte in das Glättwerk bereits in jener Geometrie eingespeist wird, die man auch am Ende des Prozesses erreichen will. So ist ein Folien- oder Plattenglättprozess u. a. dadurch gekennzeichnet, dass die Breite der in das Glättwerk eingespeisten Folien- bzw. Plattenbahn durch den Glättprozess nicht verändert wird. Diese Druckschrift lehrt die Dicke der Kunststofffolienbahn oder der Kunststoffplattenbahn anzupassen.

US 2006/038310 A1 beschreibt ein Verfahren zur Herstellung eines mehrfarbigen Gefäßes mittels eines Blasverfahrens. Dazu werden in einem Extruder verschiedene Materialströme entsprechend gesteuert.

DE 32 19 092 A1 beschreibt ein Verfahren zur Herstellung einer koextrudierten Kompositeschicht, welche aus einem thermoplastischen Material besteht, | wobei die Schicht modifiziert ist durch in der Schicht enthaltene Strukturen.

US 3 540 964 A beschreibt ein Verfahren zur Herstellung einer mehrfarbigen Folie, wobei die Folie unterschiedlich farbige Schichten enthält.

US 2001/038160 A1 beschreibt ein Bandgießgerät mit einem Gießbehälter aus dem durch eine Gießöffnung zwei unterschiedliche Massen fließen. Die Massen werden erhitzt und treten als ein Streifen aus. Der Streifen wird dann auf ein Kühlgerät zum Aushärten aufgebracht.

US 2015/056432 A1 beschreibt eine Struktur, die mindestens einen Materialstreifen umfasst, wobei der Streifen eine sich verändernde Breite über seine gesamte Länge hat.

FR 1 384 293 A beschreibt ein Verfahren zur Verzierung einer Plastikfolie.

WO 2011/072818 A1 beschreibt einen Kartenkörper für einen tragbaren Datenträger, wie z.B. eine Chipkarte. Der Kartenkörper umfasst wenigstens eine koextrudierte Schicht, die wenigstens zwei Bereiche mit unterschiedlichen Materialeigenschaften aufweist. Damit ist es möglich, dass ein Kartenkörper hergestellt wird, der eine Vielzahl von lichtundurchlässigen und lichtdurchlässigen Streifen umfasst.

US 2013/094064 A1 beschreibt ein Verfahren zum Absichern von Dokumenten, indem eine bestimmte Verteilung von Punkten auf das Dokument gedruckt wird.

WO 2009/153056 A2 beschreibt ein Verfahren zur Herstellung eines tragbaren Datenträgers, wie z.B. eine Chipkarte.

Der Datenträger umfasst einen Kartenkörper, welcher eine oder mehrere Schichten umfasst. Die einzelne Schicht wird koextrudiert, wobei sie wenigstens zwei Bereiche mit unterschiedlichen Materialeigenschaften aufweist. Somit kann der Kartenkörper Streifen aus lichtundurchlässigen und lichtdurchlässigen Material aufweisen.

JP S61 32732 A beschreibt ein Verfahren zur Herstellung einer Folie, wobei die Folie aus mindestens zwei Schichten besteht. Die zwei Schichten sind übereinander angeordnet und werden mit unterschiedlichen Geschwindigkeiten so extrudiert, dass sie aufeinander zu liegen kommen.

Generell ist es bekannt, einen kartenförmigen Datenträger, beispielsweise eine Kreditkarte, bereitzustellen, indem mehrere Folien bereitgestellt werden, welche miteinander zu einem Kartenkörper auflaminiert werden. Hierzu ist es bekannt, unterschiedliche Sicherheitsmerkmale in den Kartenkörper einzubringen. Beispielsweise ist es bekannt, Partikel in die Folien einzubringen, welche diffus verteilt sind und somit einen besonderen optischen Effekt hervorrufen.

Generell besteht ein Bedarf, bestehende Sicherheitsmerkmale weiter zu entwickeln und Wertdokumente derart bereitzustellen, dass diese fälschungssicher sind oder nur mit sehr großem Aufwand nacharbeitbar sind. So wird stets versucht, besonders individuelle Sicherheitsmerkmale zu gestalten, welche dann nicht gemäß herkömmlicher Verfahren bereitgestellt werden können. So können beispielsweise biometrische Merkmale, beispielsweise ein Foto, auf einem Datenträger angebrac2ht werden, die den Datenträger besonders fälschungssicher machen sollen.

So sind unterschiedliche Drucktechniken bekannt, mit denen Wertdokumente individualisiert werden können. Hierbei ist stets darauf zu achten, dass die Sicherheitsmerkmale die Funktionalität des Datenträgers nicht beeinträchtigen. So weisen typischerweise Chipkarten unterschiedliche elektronische Bauelemente auf, welche nicht von entsprechenden Sicherheitsmerkmalen, wie z. B. einer Folie, gestört werden dürfen. So wird eine Chipkarte typischerweise mittels einer Induktionsspule mit Strom versorgt. Hierbei ist darauf zu achten, dass eine Folie nicht die Funktionalität einer solchen Spule beeinträchtigt.

Ferner erfolgt gemäß herkömmlichen Verfahren ein Bereitstellen einer sogenannten Streifenfolie, welche mittels koextrudierter Streifen hergestellt wird. Diese koextrudierten Streifen sind alternierend angeordnet und sind in Extrusionsrichtung stets gleich breit. Auf diese Art und Weise können beispielsweise transparente Streifen in ein Wertdokument eingebracht werden. Hierzu ist es bekannt, unterschiedliche Materialien mittels Extrudierens derart zu verschmelzen, dass bestimmte Eigenschaften entstehen. Diese können zum einen einen ästhetischen Effekt hervorrufen, oder aber auch ein Sicherheitsmerkmal implementieren. Hierbei ist es jedoch möglich, solche Streifenfolien bereits mit marktüblichen Extrudern herzustellen. Somit besteht der Nachteil, dass diese Folien mit herkömmlichen Mitteln nacharbeitbar sind, und dass die Streifen innerhalb der Folie somit kein zuverlässiges Sicherheitsmerkmal bereitstellen.

Es ist somit eine Aufgabe der vorliegenden Erfindung, ein Verfahren zum Herstellen einer Folie, aufweisend ein Sicherheitsmerkmal, vorzuschlagen. Hierbei wird gefordert, dass für den berechtigten Benutzer, welcher über speziell eingerichtete Produktionsgeräte verfügt, der technische Aufwand gering ist, dass jedoch bei nicht-berechtigten Personen ein großer Aufwand entsteht, dieses Sicherheitsmerkmal nachzuarbeiten. Es ist ferner eine Aufgabe der vorliegenden Erfindung, einen entsprechenden Datenträger vorzuschlagen bzw. ein Extrudersystem zum Herstellen einer Folie mit dem Sicherheitsmerkmal. Ferner ist es eine Aufgabe der vorliegenden Erfindung, ein Computerprogrammprodukt mit Steuerbefehlen bereitzustellen, welche das vorgeschlagene Verfahren implementieren bzw. das vorgeschlagene Extrudersystem betreiben.

Die Aufgabe wird gelöst durch ein Verfahren zum Herstellen einer Folie mit variabler Streifengeometrie gemäß Patentanspruch 1. Weitere vorteilhafte Ausgestaltungen sind in den Unteransprüchen angegeben.

Demgemäß wird ein Verfahren zum Herstellen einer Folie mit variabler Streifengeometrie zur Verwendung in einem Datenträger vorgeschlagen. Hierbei erfolgt ein Extrudieren mindestens einer ersten Fläche und mindestens einer zweiten Fläche derart, dass die Flächen in orthogonal zur Extrusionsrichtung alternierender Abfolge die Folie ausformen, wobei ein Variieren mindestens einer der Flächen bezüglich ihrer Geometrie erfolgt.

Das vorgeschlagene Verfahren findet Einsatz bei der Herstellung eines Datenträgers, typischerweise einem Wertdokument. Ein Wertdokument ist beispielsweise eine Kreditkarte bzw. eine Chipkarte, was auch als kartenförmiger Datenträger bezeichnet wird. Ferner ist es aber auch möglich, das vorgeschlagene Verfahren bei anderen Datenträgern bzw. Wertdokumenten einzusetzen. So sind bestimmte Datenseiten, ID-Karten, Bezahlkarten oder dergleichen mehr mögliche Anwendungsgebiete. Eine Datenseite ist ein Wertdokument, welches in ein buchförmiges weiteres Wertdokument eingebracht wird. So enthalten Reisepässe typischerweise eine Seite, welche entsprechende elektronische Komponenten aufweist, die mittels einer Luftschnittstelle ausgelesen werden können.

Die vorgeschlagene Folie bzw. das Verfahren zum Herstellen der Folie eignen sich für die Verwendung in einem Wertdokument bzw. in einem Datenträger. Hierzu ist es beispielsweise möglich, die Folie mit weiteren Folien derart zusammenzulaminieren, dass ein Kartenkörper entsteht. Bei der vorgeschlagenen Folie handelt es sich um eine Streifenfolie mit variabler Streifengeometrie. Eine Streifenfolie wird generell aus alternierenden Flächen angeordnet, wobei einzelne Flächen schmaler sein können als andere und somit einen Streifen ausformen. Hierbei wird erfindungsgemäß vorgeschlagen, dass gemäß dem bereitgestellten Verfahren bzw. dem Extrudersystem die Streifengeometrie nach den Vorgaben des Herstellers angepasst werden kann. Somit besteht generell eine variable Streifengeometrie derart, dass nach einem Herstellungsprozess die gewünschte Streifenform bzw. die gewünschte Flächenform innerhalb der Folie vorliegt. So ist es erfindungsgemäß möglich, einzelne Streifen in ihrer Breite und in ihrem Verlauf anzupassen. Auf diese Art und Weise wird eine Folie bereitgestellt, welche, falls sie mit weiteren Folien zusammenlaminiert wird und einen Datenträger bzw. ein Wertdokument ausformt, ein Sicherheitsmerkmal darstellen kann.

Erfindungsgemäß wird es vorgeschlagen, mindestens eine erste Fläche und mindestens eine zweite Fläche zu extrudieren, derart, dass die Flächen in orthogonal zur Extrusionsrichtung alternierender Abfolge die Folie ausformen. Somit wird typischerweise ein Kunststoff aufgeschmolzen und mittels eines Extruders bzw. mehrerer Extruder flächig ausgeformt. Hierbei können mehrere Extruder vorgesehen sein, oder aber auch mehrere Extruderdüsen, die unterschiedliche Flächen ausformen. Typischerweise umfasst eine solche Folie bis zu zehn Flächen, welche alternierend angeordnet sind. Das heißt also, dass die Flächen, bildlich gesprochen, derart nebeneinander gelegt werden, dass eine erste Fläche auf eine zweite Fläche folgt, und darauf wieder die erste Fläche.

Die erste Fläche und die zweite Fläche können sich derart unterscheiden, dass sie durch unterschiedliche Extruder bzw. Extruderdüsen bereitgestellt werden. Hierbei ist es aber auch möglich, unterschiedliche Materialien aufzuschmelzen und die erste Fläche gemäß einem ersten Material bereitzustellen und die zweite Fläche gemäß einem zweiten Material. Somit ist es auch möglich, Farbpigmente in die Materialien einzubringen, derart, dass sich die erste Fläche farblich von der zweiten Fläche unterscheidet. Somit kann ein alternierendes Muster geschaffen werden, welches bildlich gesprochen einem Zebrastreifen ähnelt. Somit werden typischerweise mehrere erste Flächen und mehrere zweite Flächen vorgeschlagen, welche sich je nach erster Art oder zweiter Art ähneln bzw. gleich sind. Beispielsweise wird die erste Fläche rot ausgestaltet und die zweite Fläche grün, wodurch sich bei einem Alternieren von ersten und zweiten Flächen ein Farbmuster von Rot, Grün, Rot, Grün, Rot ergeben kann. Dies ist lediglich beispielhaft und bezieht sich auch auf weitere Flächen, also beispielsweise eine dritte Fläche, die derart angeordnet wird, dass auf eine erste Fläche eine zweite Fläche folgt, und darauf die dritte Fläche.

Generell bezeichnet die Extrusionsrichtung diejenige Richtung, in der das aufgeschmolzene Material durch den Extruder hindurchgeführt wird und nach seiner Fertigung aus dem Extruder herausgeführt wird. Hierbei können weitere Gerätschaften Verwendung finden, wie beispielsweise Walzen, die paarweise derart angeordnet werden, dass extrudierte Flächen bzw. die Folie weiter verpresst werden. Eine solche Walze bzw. ein solches Walzenpaar ist gemäß einem Aspekt Teil des vorgeschlagenen Extrudersystems.

Erfindungsgemäß wird nunmehr vorgeschlagen, die mindestens eine Fläche bezüglich ihrer Geometrie zu variieren. Somit wird also die Geometrie während dem Herstellungsprozess derart verändert, dass keine geraden Streifen bzw. keine geraden Flächen auf der Folie entstehen. Herkömmlich ist es bekannt, Streifenfolien derart bereitzustellen, dass eine Fläche auf einen Streifen folgt, worauf wiederum eine Fläche folgt. Erfindungsgemäß wird dieses Konzept derart abgewandelt, dass die Streifen und folglich auch die sie umgebenden Flächen nicht mehr gerade ausgeformt sind, sondern dass sich einzelne Flächen verjüngen bzw. verbreitern, derart, dass kein gerader Streifen entsteht, sondern vielmehr ein individuell einstellbares Muster, welches nur mit großem technischen Aufwand nacharbeitbar ist. So wird sichergestellt, dass die resultierenden Flächen innerhalb der Folie nicht mehr gerade sind, sondern jegliche Geometrie darstellen können.

Wird eine Fläche in ihrer Geometrie variiert, so impliziert dies typischerweise, dass anliegende Flächen ebenfalls in ihrer Geometrie angepasst werden, da die Flächen typischerweise formschlüssig aneinanderliegen. Wird also in eine erste Fläche eine Krümmung eingearbeitet, so wird auch in die angrenzende Fläche eine entsprechende Krümmung eingearbeitet. Hierbei sind unterschiedliche Muster denkbar, insbesondere sind auch bezüglich der einzelnen Flächen unterschiedliche Farben denkbar. Auf diese Art und Weise entsteht ein Muster, welches so aus Folie noch nicht bekannt ist und somit als ein Sicherheitsmerkmal gelten kann.

Gemäß einem Aspekt der vorliegenden Erfindung erfolgt das Variieren der Geometrie in Extrusionsrichtung und/oder in orthogonaler Extrusionsrichtung. Dies hat den Vorteil, dass das Variieren in Extrusionsrichtung beispielsweise derart erfolgen kann, dass eine Fläche unterteilt wird und somit wiederum ein bestimmtes Muster bereitgestellt wird, welches sich von bekannten Mustern unterscheidet. Wird die Geometrie hingegen in orthogonaler Extrusionsrichtung variiert, so kann ein Verbreitern eines Streifens bzw. einer Fläche durchgeführt werden. Hierbei ist es besonders vorteilhaft, die Geometrie sowohl in Extrusionsrichtung als auch in orthogonaler Extrusionsrichtung derart zu variieren, dass einstellbare Muster entstehen. So können auch diagonale Flächen implementiert werden, derart, dass sich ein bestehender Streifen in eine Richtung diagonal durch die Folie hindurchzieht.

Da die Folie aufgrund ihrer dünnen Beschaffenheit im Wesentlichen zweidimensional ausgeformt ist, ist es somit möglich, jegliche Linienführung auf einer x-y-Achse zu bewerkstelligen.

Erfindungsgemäß erfolgt das Variieren der Geometrie mittels einer Transversalbewegung mindestens einer Walze eines Extruders. Dies hat den Vorteil, dass das aufgeschmolzene Material, welches bereits flächig ausgestaltet ist, mittels einer Bewegung einer Walze derart verzerrt werden kann, dass sich beispielsweise eine Wellenbewegung in den Flächen widerspiegelt. Somit ist es möglich, die Walze in Längsachse in eine Richtung oder aber auch hin und her zu bewegen und somit die angepressten Flächen in ihrer Geometrie zu variieren.

Gemäß einem weiteren Aspekt der vorliegenden Erfindung erfolgt das Variieren der Geometrie mittels eines Bewegens einer positionsvariablen Verteilerschiene des Extruders. Dies hat den Vorteil, dass auch weitere Komponenten innerhalb des Extruders derart bezüglich ihrer Position variiert werden können, dass ein entsprechendes Muster der ersten Flächen und der zweiten Flächen entsteht. Ferner ist es auch möglich, dass die Geometrie sowohl durch eine Walze als auch durch eine Verteilerschiene in die Flächen eingebracht wird.

Gemäß einem weiteren Aspekt der vorliegenden Erfindung erfolgt das Variieren der Geometrie mittels eines Anpassens eines Schmelzdurchflusses des Extruders. Dies hat den Vorteil, dass durch strukturelle Anpassung der Schmelzdurchfluss in dem Extruder derart angepasst werden kann, dass sich die Geschwindigkeit des Schmelzdurchflusses ändert bzw. dass sich die Bahn des Schmelzdurchflusses ändert und somit unterschiedliche Geometrien der einzelnen Flächen entstehen. Somit kann mit einfachen technischen Mitteln ein Extruder betrieben werden, der es erfindungsgemäß ermöglicht, die Geometrien der Flächen zu variieren.

Gemäß einem weiteren Aspekt der vorliegenden Erfindung unterscheiden sich die mindestens eine erste Fläche und die mindestens eine zweite Fläche in ihrer Breite. Dies hat den Vorteil, dass eine erste Fläche größer ausgestaltet werden kann als eine zweite Fläche und somit eine Folie bereitgestellt werden kann, bei der jeweils zwei große Flächen einen engeren Streifen umgeben. Auch dies stellt ein Sicherheitsmerkmal dar und es kann auch ein entsprechender ästhetischer Effekt erzeugt werden. Ferner ist es auch möglich, beispielsweise die dünnere Fläche als transparente Fläche auszugestalten um somit wiederum ein Unterscheidungsmerkmal zu herkömmlichen Streifenfolien zu schaffen.

Gemäß einem weiteren Aspekt der vorliegenden Erfindung sind mehrere erste Flächen und mehrere zweite Flächen vorgesehen, wobei die ersten Flächen gleich breit und die zweiten Flächen gleich breit sind. Dies hat den Vorteil, dass die ersten Flächen stets in ihrer Geometrie gleich sind. Dies gilt auch für die zweiten Flächen. Somit kann die erfindungsgemäße Folie mit geringem technischen Aufwand bereitgestellt werden bzw. das vorgeschlagene Verfahren technisch einfach umgesetzt werden.

Gemäß einem weiteren Aspekt der vorliegenden Erfindung wird mindestens eine Fläche aus unterschiedlichen Materialien geformt. Dies hat den Vorteil, dass auch innerhalb einer einzigen Fläche ein alternierendes Muster geschaffen werden kann. So kann eine Fläche wiederum unterschiedliche Materialien umfassen, welche unterschiedliche farbliche oder strukturelle Merkmale aufweisen.

Gemäß einem weiteren Aspekt der vorliegenden Erfindung wird mindestens eine Fläche aus mehreren Teilflächen zusammengesetzt. Dies hat den Vorteil, dass eine Fläche beispielsweise mosaikartig zusammengesetzt werden kann, oder aber auch, dass innerhalb einer einzigen Fläche ein bestimmtes Farbmuster implementierbar ist.

Gemäß einem weiteren Aspekt der vorliegenden Erfindung wird mindestens eine Fläche mäanderförmig, streifenförmig und/ oder mit variierender Breite ausgeformt. Dies hat den Vorteil, dass unterschiedliche Sicherheitsmerkmale bereitgestellt werden können, die es einem Betrachter ermöglichen, das Vorliegen der variierten Geometrie ohne technische Hilfsmittel festzustellen. So wird es erfindungsgemäß ermöglicht, dass eine Vielzahl von Mustern bei der Ausgestaltung einer Folie berücksichtigt werden kann und somit auch spezielle Kundenwünsche befriedigt werden können. Insbesondere ist es auch möglich, einzelne Muster zu kombinieren.

Gemäß einem weiteren Aspekt der vorliegenden Erfindung wird mindestens eine Fläche innerhalb einer Folienfläche diagonal angeordnet. Dies hat den Vorteil, dass ein Streifen innerhalb der Folie erzeugbar ist, der sich eindeutig von herkömmlichen Sicherheitsmerkmalen unterscheidet. Dies ist beispielsweise derart möglich, dass eine Walze, welche dem Extruder nachgeordnet ist, gemäß ihrer Längsachse bewegt und somit eine diagonale Verzerrung der Flächen innerhalb der Folie bewerkstelligt wird.

Gemäß einem weiteren Aspekt der vorliegenden Erfindung werden an der Folie mittels eines Matrixblocks aufweisend punktuelle und/der ellipsenförmige Durchlässe Farbpixel angeordnet. Dies hat den Vorteil, dass einzelne Bestandteile der Folie mit kleinen Farbpunkten ausgeformt werden, derart, dass sich beispielsweise ein bestimmter Farbeffekt einstellt. So ist es möglich, Farbübergänge bereitzustellen und generell in einem Verarbeitungsschritt bestimmte Muster in die Folie einzubringen.

Die Aufgabe wird auch gelöst durch eine Folie, hergestellt mittels eines Verfahrens, wie bereits beschrieben. Somit weist die Folie mindestens eine erste Fläche und eine zweite Fläche auf, welche in ihrer Geometrie derart variiert sind, dass sie vom bekannten Geometrietyp, der lediglich Streifen vorsieht, abweichen. So ist die vorliegende Erfindung auch auf die Folie an sich gerichtet sowie auf einen Datenträger bzw. ein Wertdokument, aufweisend die Folie. Hierbei ist es möglich, weitere Folien mit der erfindungsgemäßen Folie derart zusammenzulaminieren, dass ein Kartenkörper bereitgestellt wird.

Die Aufgabe wird auch gelöst durch ein Extrudersystem zum Herstellen einer Folie mit variabler Streifengeometrie zur Verwendung in einem Datenträger bzw. einem Wertdokument. Hierzu ist eine Extrudereinheit vorgesehen, eingerichtet zum Extrudieren mindestens einer ersten Fläche und mindestens einer zweiten Fläche, derart, dass die Flächen in orthogonal zur Extrusionsrichtung alternierender Abfolge die Folie ausformen, wobei eine Variationseinheit, eingerichtet zum Variieren mindestens einer der Flächen bezüglich ihrer Geometrie, vorgesehen ist. Die Variationseinheit kann beispielsweise als eine Walze bzw. als ein Walzenpaar vorliegen oder aber auch als eine positionsvariable Verteilerschiene.

Die Aufgabe wird ferner gelöst durch ein Computerprogrammprodukt mit Steuerbefehlen, welche das vorgeschlagene Verfahren implementieren bzw. die vorgeschlagene Systemanordnung betreiben.

Erfindungsgemäß ist es besonders vorteilhaft, dass die Verfahrensschritte als strukturelle Merkmale des Extrudersystems bzw. in der Folie nachgearbeitet werden können. So ist das Extrudersystem eingerichtet, das vorgeschlagene Verfahren auszuführen. Die vorgeschlagene Folie weist wiederum in struktureller Form diejenigen Merkmale auf, welche mittels des Verfahrens erzeugt werden.

Weitere vorteilhafte Ausgestaltungen werden anhand der beigefügten Figuren näher erläutert. Es zeigen:
- Fig. 1:: eine Folie mit alternierenden Flächen gemäß dem Stand der Technik;
- Fig. 2:: eine Folie mit alternierenden Flächen, welche erfindungsgemäß variiert sind;
- Fig. 3:: eine Folie mit abwechselnden und tropfenförmigen Streifen bzw. Flächen gemäß einem Aspekt der vorliegenden Erfindung;
- Fig. 4:: eine Folie mit diagonalen Flächen gemäß einem Aspekt der vorliegenden Erfindung;
- Fig. 5:: eine Folie mit sich abwechselnden Streifen bzw. Flächen und sich langsam fließend ändernden Materialien bzw. Materialeigenschaften in Fließrichtung gemäß einem Aspekt der vorliegenden Erfindung;
- Fig. 6:: eine Folie mit sich abwechselnden Streifen bzw. Flächen und sich ändernden Materialien bzw. Materialeigenschaften in Fließrichtung gemäß einem Aspekt der vorliegenden Erfindung;
- Fig. 7:: ein Extrudersystem zum Herstellen der erfindungsgemäßen Folie gemäß einem Aspekt der vorliegenden Erfindung;
- Fig. 8:: ein schematischer Düsenblock und eine positionsvariable Verteilerschiene und Düsenlippen gemäß einem Aspekt der vorliegenden Erfindung;
- Fig. 9:: eine schematische Verteilerschiene in einer Seitenansicht gemäß einem Aspekt der vorliegenden Erfindung;
- Fig. 10:: ein Variieren eines Schmelzedurchflusses gemäß einem Aspekt der vorliegenden Erfindung;
- Fig. 11:: einen Matrixblock für einen Extruder gemäß einem Aspekt der vorliegenden Erfindung; und
- Fig. 12:: ein Ablaufdiagramm eines Verfahrens zum Bereitstellen einer Folie mit variabler Streifengeometrie gemäß einem Aspekt der vorliegenden Erfindung.

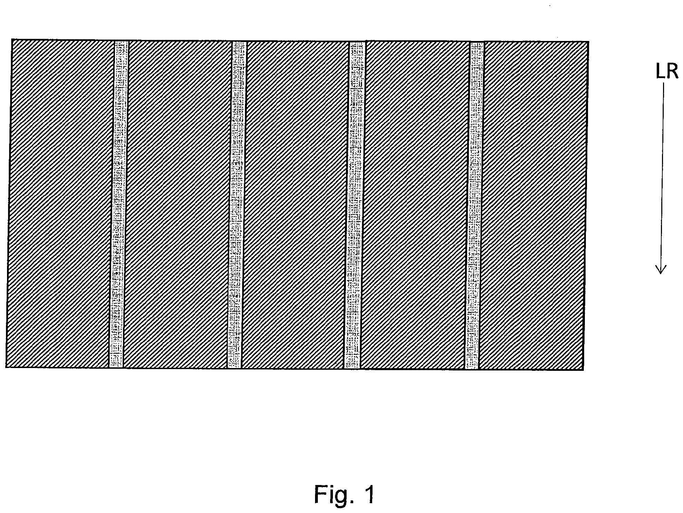

Fig. 1 zeigt eine Folie mit fester Streifengeometrie derart, dass auf der linken Seite eine erste Fläche angeordnet ist, worauf eine zweite streifenförmige Fläche folgt. Darauf folgt wiederum eine erste Fläche und eine streifenförmige zweite Fläche. Dies folgt alternierend, bis eine erste Fläche die Folie seitlich abschließt. Wie rechts eingezeichnet, folgt die Streifengeometrie stets der Laufrichtung des Extruders und wird nicht während dem Herstellungsprozess variiert. Das heißt also, dass lediglich gerade Flächen auf der Folie entstehen und die entsprechenden Instrumente nicht nachjustiert, also variiert werden müssen. Dies wird vorliegend als feste Streifengeometrie bezeichnet.

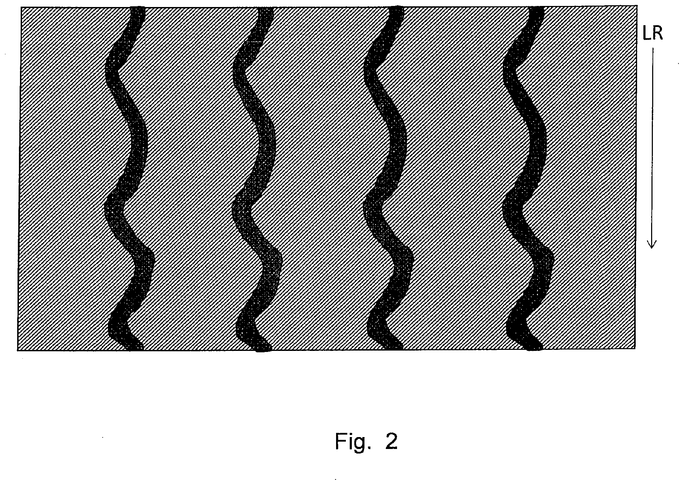

Fig. 2 hingegen zeigt eine variierte Streifengeometrie derart, dass in dem Herstellungsvorgang die entsprechenden Bauteile, beispielsweise eine Verteilerschiene bzw. mindestens eine Walze, variiert werden, und somit auch das Variationsmuster in der Flächengeometrie Niederschlag findet. Wie in Fig. 2 ersichtlich ist, folgt auf der linken Seite eine zweite Fläche auf eine erste Fläche, wodurch also ganz links und ganz rechts eine erste Fläche angeordnet ist. Die zweite Fläche kann als eine streifenförmige Fläche bezeichnet werden, die mäanderförmig ausgestaltet ist. Wie in der vorliegenden Fig. 2 ersichtlich ist, wird die Streifengeometrie variiert, wodurch eben keine gerade und feste Streifengeometrie entsteht. Dies ist erfindungsgemäß vorteilhaft, da ein Kontrollpersonal eine solche Streifengeometrie ohne Verwendung von technischen Hilfsmitteln erkennen kann. Somit kann auch festgestellt werden, ob die variable Streifengeometrie als ein Sicherheitsmerkmal in einem Wertdokument vorhanden ist.

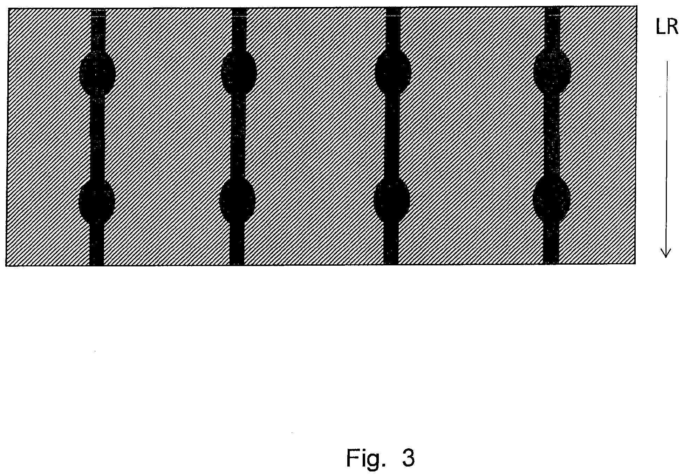

Fig. 3 zeigt ebenfalls eine variable Streifengeometrie, bei der entsprechende Variierungseinheiten nachjustiert werden müssen. So folgt in Extrusionsrichtung erst eine gerade Fläche bzw. ein Streifen, die dann verbreitert und anschließend verjüngt wird, derart, dass sich eine Tropfenform ausbildet. Somit sind die zweiten Flächen derart variiert, dass diese zuerst streifenartig ausgeformt werden, dann tropfenförmig, dann wiederum streifenförmig und tropfenförmig.

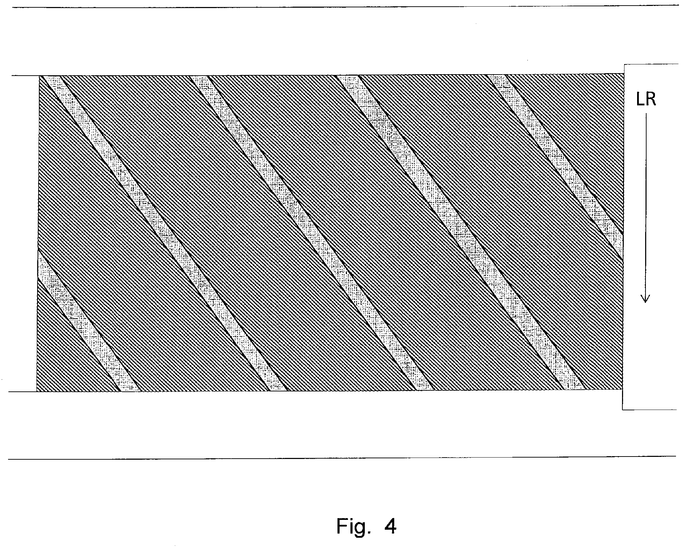

Fig. 4 zeigt sich abwechselnde Flächen, wobei die zweiten Flächen jeweils streifenförmig ausgeformt sind. Die diagonalen Streifen sind beispielsweise auch mit dem Muster gemäß Fig. 3 kombinierbar.

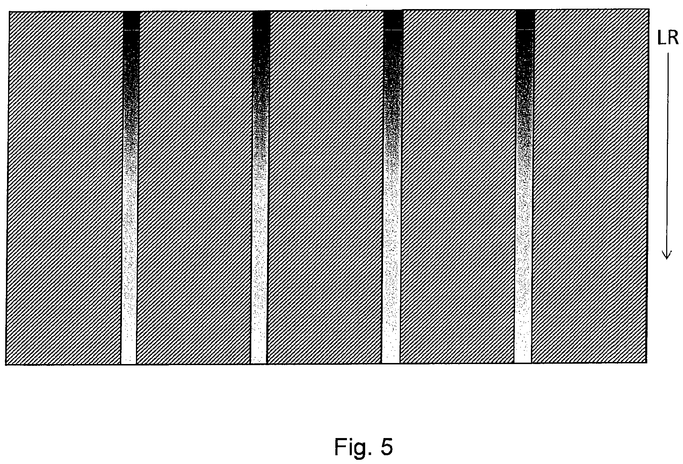

Fig. 5 zeigt eine Folie mit sich abwechselnden Streifen und Flächen und sich langsam fließend ändernden Materialien bzw. Materialeigenschaften in Fließrichtung. Diese Struktur kann mit der erfindungsgemäß vorgeschlagenen Variation der Streifengeometrie kombiniert werden. Hierbei ist es insbesondere vorteilhaft, dass herkömmliche Herstellungstechniken mit der erfindungsgemäßen Technik bzw. dem vorgeschlagenen Verfahren kombiniert werden können.

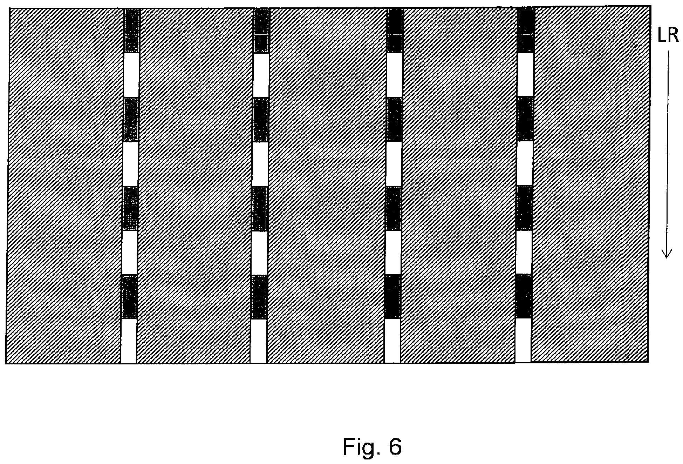

Fig. 6 zeigt eine Folie mit sich abwechselnden Streifen und Flächen und sich sofort ändernden Materialien bzw. Materialeigenschaften in Fließrichtung. In der vorliegenden Figur ist ersichtlich, dass die zweite Fläche, also die Streifen, derart unterteilt sind, dass sich eine vorbestimmte Struktur bzw. Farbgebung einstellt. Somit ist es also möglich, beispielsweise die zweite Fläche in Teilflächen aufzuspalten und hierfür auch unterschiedliche Materialien mit unterschiedlichen Farben zu verwenden. Auch dies stellt ein besonders sicheres Merkmal dar, da die spezielle Geometrie der zweiten Flächen nur mit erheblichem technischen Aufwand nachgearbeitet werden kann.

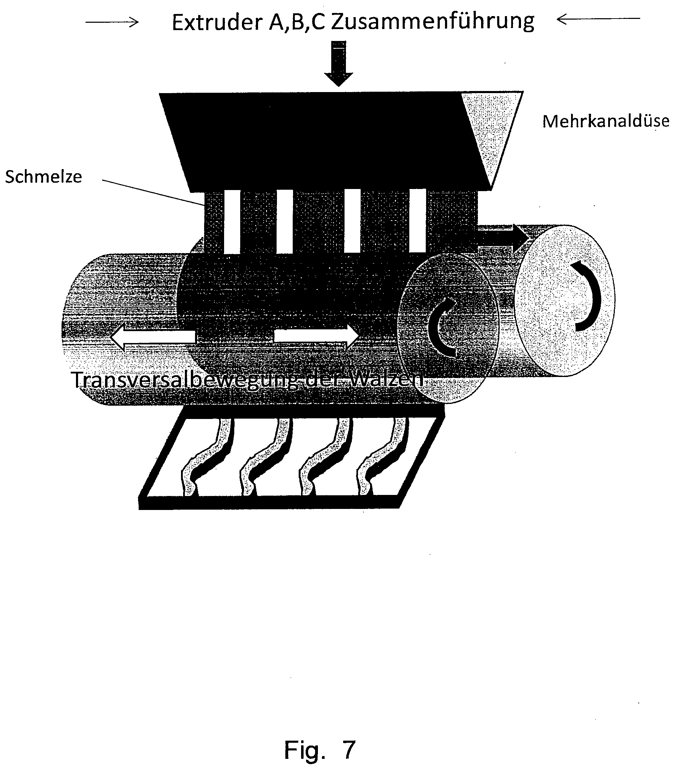

Fig. 7 zeigt ein Extrudersystem, wie es der allgemeinen Bauart nach bekannt ist, welches jedoch derart angepasst ist, dass mindestens eine Walze eine Transversalbewegung durchführt. Wie in der vorliegenden Figur gezeigt ist, wird die Walze entlang der Pfeile in Längsrichtung geführt, wodurch am Ende des Extruders, also in der vorliegenden Figur unten, eine wellenförmig zweite Fläche in der Folie entsteht. Die Folie am unteren Ende der Fig. 7 entspricht somit der vorgeschlagenen Folie, die fünf erste Flächen und vier zweite Flächen aufweist, welche jeweils in ihrer Geometrie während dem Herstellungsprozess variiert sind.

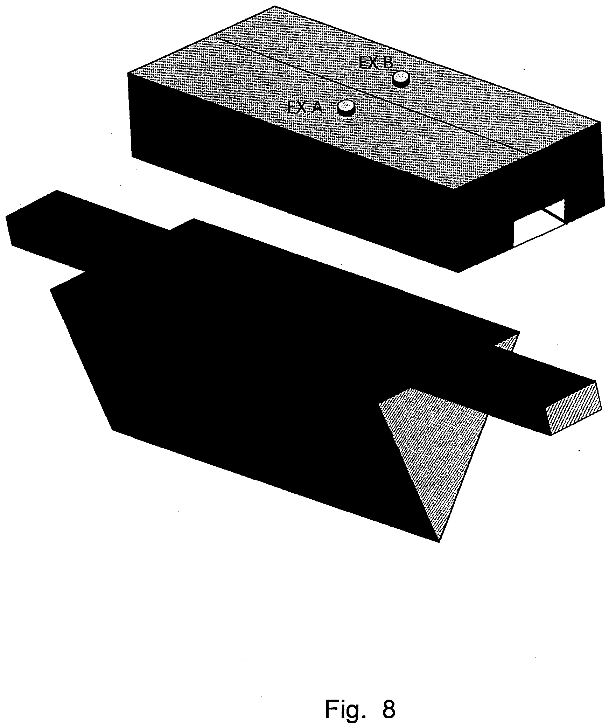

Fig. 8 zeigt einen schematischen Düsenblock, bei dem die Verteilung nach links und rechts im Block im Kleiderbügelsystem erfolgen kann. Wie die Pfeile in der vorliegenden Fig. 8 anzeigen, ist die Verteilerschiene positionsvariabel ausgestaltet und kann sowohl gemäß ihrer Längsrichtung variiert werden als auch in ihrer Höhe. Hierbei sind beispielsweise Folien herstellbar, wie sie in Fig. 2 und 4 gezeigt sind.

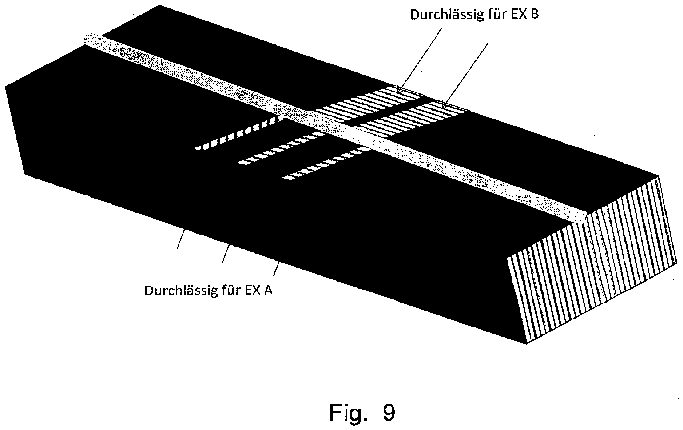

Fig. 9 zeigt eine schematische Abbildung einer Verteilerschiene, mit Durchlässen für einen ersten Extruder und einen zweiten Extruder. Die Schiene muss so ausgelegt werden, dass beim Verschieben immer ein gleichmäßiger Massedruck anliegt.

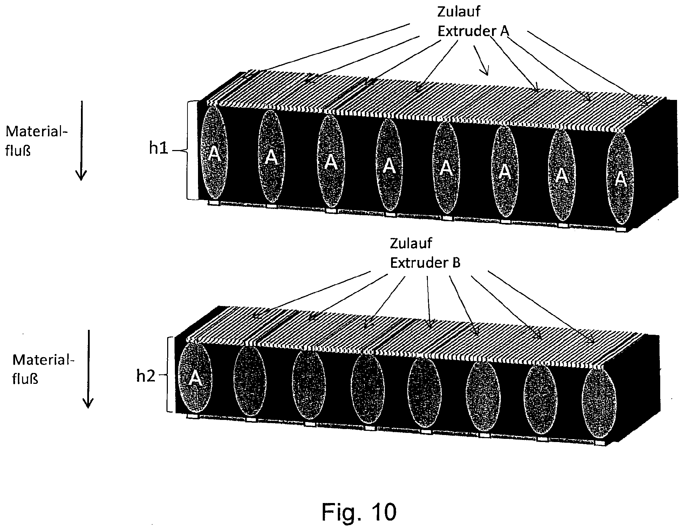

Fig. 10 zeigt eine Schiene mit variabler Höhe. Hierbei ist in der oberen Hälfte der Fig. 10 eine erste Position und in der unteren Hälfte eine zweite Position der Schiene angedeutet. Wie links angetragen, variiert also die Höhe h1 und h2. Der niedrigere Schmelzefluss beim Extruder B wird in der Regel durch einen höheren Schmelzefluss des Extruders A ausgeglichen. Somit ist auch eine Folie gemäß Fig. 3 herstellbar.

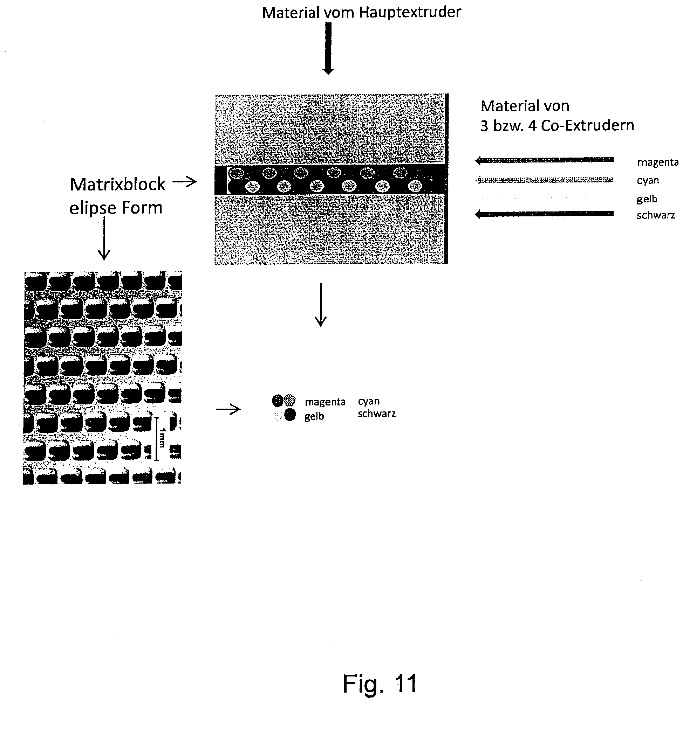

Fig. 11 zeigt auf der linken Seite einen Matrixblock, der derart ausgestaltet werden kann, dass unterschiedliche Materialien durch ihn hindurchgepresst werden können und somit Farbpixeln bzw. Farbpunkte auf die Folie aufgebracht bzw. in die Folie eingebracht werden können. Hierbei ist es möglich, gemäß einer bekannten Überlagerung von einzelnen Farben wiederum eine weitere Farbe zu mischen. Somit eignen sich als Ausgangsfarben beispielsweise Magenta, Cyan, Gelb und Schwarz. Hierdurch lassen sich viele weitere Farben erzeugen. Der Fachmann erkennt hierbei, wie er das Mischverhältnis einzustellen hat.

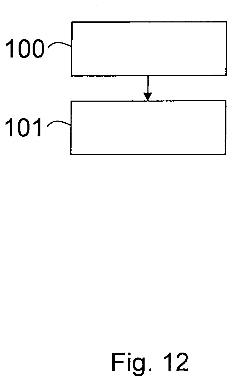

Fig. 12 zeigt in einem schematischen Ablaufdiagramm ein Verfahren zum Herstellen einer Folie mit variabler Streifengeometrie zur Verwendung in einem Datenträger bzw. einem Sicherheitsdokument. Es folgt ein Extrudieren 100 mindestens einer ersten Fläche und mindestens einer zweiten Fläche derart, dass die Flächen in orthogonal zur Extrusionsrichtung alternierender Abfolge die Folie ausformen, wobei ein Variieren 101 mindestens einer der Flächen bezüglich ihrer Geometrie erfolgt. Der Fachmann erkennt hierbei, dass die vorgenannten Verfahrensschritte iterativ und/ oder in anderer Reihenfolge ausgeführt werden können.

## Patentansprüche

1. Verfahren zum Herstellen einer Folie mit variabler Streifengeometrie zur Verwendung in einem Datenträger, aufweisend:
- Extrudieren (100) mindestens einer ersten Fläche und mindestens einer zweiten Fläche, derart, dass die Flächen in orthogonal zur Extrusionsrichtung alternierender Abfolge die Folie ausformen,
- Variieren (101) mindestens einer der Flächen bezüglich ihrer Geometrie erfolgt,
- **dadurch gekennzeichnet, dass** das Variieren (101) der Geometrie mittels einer Transversalbewegung mindestens einer Walze eines Extruders erfolgt.

2. Verfahren nach Anspruch 1, **dadurch gekennzeichnet, dass** das Variieren (101) der Geometrie in Extrusionsrichtung und/ oder in orthogonaler Extrusionsrichtung erfolgt.

3. Verfahren nach einem der vorhergehenden Ansprüche, **dadurch gekennzeichnet, dass** das Variieren (101) der Geometrie mittels eines Bewegens einer positionsvariablen Verteilerschiene des Extruders erfolgt.

4. Verfahren nach einem der vorhergehenden Ansprüche, **dadurch gekennzeichnet, dass** das Variieren (101) der Geometrie mittels eines Anpassens eines Schmelzdurchflusses des Extruders erfolgt.

5. Verfahren nach einem der vorhergehenden Ansprüche, **dadurch gekennzeichnet, dass** sich die mindestens eine erste Fläche und die mindestens eine zweite Fläche in ihrer Breite unterscheiden.

6. Verfahren nach einem der vorhergehenden Ansprüche, **dadurch gekennzeichnet, dass** mehrere erste Flächen und mehrere zweite Flächen vorgesehen sind, wobei die ersten Flächen gleich breit und die zweiten Flächen gleich breit sind.

7. Verfahren nach einem der vorhergehenden Ansprüche, **dadurch gekennzeichnet, dass** mindestens eine Fläche aus unterschiedlichen Materialien geformt wird.

8. Verfahren nach einem der vorhergehenden Ansprüche, **dadurch gekennzeichnet, dass** mindestens eine Fläche aus mehreren Teilflächen zusammengesetzt wird.

9. Verfahren nach einem der vorhergehenden Ansprüche, **dadurch gekennzeichnet, dass** mindestens eine Fläche mäanderförmig, streifenförmig und/ oder mit variierender Breite ausgeformt wird.

10. Verfahren nach einem der vorhergehenden Ansprüche, **dadurch gekennzeichnet, dass** mindestens eine Fläche innerhalb einer Folienfläche diagonal angeordnet wird.

11. Verfahren nach einem der vorhergehenden Ansprüche, **dadurch gekennzeichnet, dass** an der Folie mittels eines Matrixblocks aufweisend punktueller und/ oder ellipsenförmiger Durchlässe Farbpixel angeordnet werden.

12. Extrudersystem zum Herstellen einer Folie mit variabler Streifengeometrie zur Verwendung in einem Datenträger, aufweisend:
- eine Extrudereinheit eingerichtet zum Extrudieren (100) mindestens einer ersten Fläche und mindestens einer zweiten Fläche, derart, dass die Flächen in orthogonal zur Extrusionsrichtung alternierender Abfolge die Folie ausformen,
- eine Variationseinheit eingerichtet zum Variieren (101) mindestens einer der Flächen bezüglich ihrer Geometrie vorgesehen ist,
- **dadurch gekennzeichnet, dass** die Variationseinheit eingerichtet ist, dass das Variieren (101) der Geometrie mittels einer Transversalbewegung mindestens einer Walze der Extrudereinheit erfolgt.

## Claims

1. A method for manufacturing a foil with variable strip geometry for employment in a data carrier, having:
- extruding (100) at least a first face and at least a second face such that the faces form the foil in an alternating sequence orthogonal to the extrusion direction,
- varying (101) at least one of the faces in terms of its geometry,
- **characterized in that** the varying (101) of the geometry is effected by means of a transverse movement of at least one roller of an extruder.

2. The method according to claim 1, **characterized in that** the varying (101) of the geometry is effected in the extrusion direction and/or in the orthogonal extrusion direction.

3. The method according to any of the preceding claims, **characterized in that** the varying (101) of the geometry is effected by means of moving a locationvariable distributor rail of the extruder.

4. The method according to any of the preceding claims, **characterized in that** the varying (101) of the geometry is effected by means of adjusting a melt flow of the extruder.

5. The method according to any of the preceding claims, **characterized in that** the at least one first face and the at least one second face differ in their width.

6. The method according to any of the preceding claims, **characterized in that** several first faces and several second faces are provided, wherein the first faces are of equal width and the second faces are of equal width.

7. The method according to any of the preceding claims, **characterized in that** at least one face is molded from different materials.

8. The method according to any of the preceding claims, **characterized in that** at least one face is composed of several partial faces.

9. The method according to any of the preceding claims, **characterized in that** at least one face is formed in a meandering shape, a strip shape and/or with a varying width.

10. The method according to any of the preceding claims, **characterized in that** at least one face is arranged diagonally within a foil face.

11. The method according to any of the preceding claims, **characterized in that** color pixels are arranged on the foil by means of a matrix block having punctiform and/or elliptical apertures.

12. An extruder system for manufacturing a foil with a variable strip geometry for employment in a data carrier, having:
- an extruder unit set up for extruding (100) at least a first face and at least a second face such that the faces form the foil in an alternating sequence orthogonal to the extrusion direction,
- a variation unit set up for varying (101) at least one of the faces in terms of its geometry is provided,
- **characterized in that** the varying unit is set up such that the varying (101) of the geometry is effected by means of a transverse movement of at least one roller of the extruder unit.

## Revendications

1. Procédé de fabrication d'une feuille à géométrie variable de bandes pour l'utilisation dans un support de données, comportant :
- extrusion (100) d'au moins une première surface et d'au moins une deuxième surface, de telle sorte que les surfaces forment la feuille dans une succession alternante orthogonale à la direction d'extrusion,
- une variation (101) d'au moins une des surfaces par rapport a sa géométrie a lieu,
- **caractérisé en ce que** la variation (101) de la géométrie a lieu au moyen d'un déplacement transversal d'au moins une rouleau d'une extrudeuse.

2. Procédé selon la revendication 1, **caractérisé en ce que** la variation (101) de la géométrie a lieu en direction de l'extrusion et/ou en direction orthogonale à l'extrusion.

3. Procédé selon une des revendications précédentes, **caractérisé en ce que** la variation (101) de la géométrie a lieu au moyen d'une déplacement d'un rail de distribution à position variable de l'extrudeuse.

4. Procédé selon une des revendications précédentes, **caractérisé en ce que** la variation (101) de la géométrie a lieu au moyen d'une adaptation d'un débit de matériau fondu de l'extrudeuse.

5. Procédé selon une des revendications précédentes, **caractérisé en ce que** la au moins une première surface et la au moins une deuxième surface se différencient en leur largeur.

6. Procédé selon une des revendications précédentes, **caractérisé en ce que** plusieurs premières surfaces et plusieurs deuxièmes surfaces sont prévues, cependant que les premières surfaces sont de même largeur et les deuxièmes surfaces sont de même largeur.

7. Procédé selon une des revendications précédentes, **caractérisé en ce qu'**au moins une surface est formée en différents matériaux.

8. Procédé selon une des revendications précédentes, **caractérisé en ce qu'**au moins une surface est composée de plusieurs surfaces partielles.

9. Procédé selon une des revendications précédentes, **caractérisé en ce qu'**au moins une surface est formée en méandres, en rubans et/ou en largeur variante.

10. Procédé selon une des revendications précédentes, **caractérisé en ce qu'**au moins une surface est agencée diagonalement à l'intérieur d'une surface de feuille.

11. Procédé selon une des revendications précédentes, **caractérisé en ce que**, à la feuille, au moyen d'un bloc de matrice comportant des passages ponctuels et/ou elliptiques, des pixels de couleur sont agencés.

12. Système d'extrusion destiné à la fabrication d'une feuille à géométrie variable de bandes pour l'utilisation dans un support de données, comportant :
- une unité d'extrusion conçue pour l'extrusion (100) d'au moins une première surface et d'au moins une deuxième surface, de telle sorte que les surfaces forment la feuille dans une succession alternante orthogonale à la direction d'extrusion,
- une unité de variation conçue pour varier (101) au moins une des surfaces par rapport a sa géométrie est prévue,
- **caractérisé en ce que** l'unité de variation (101) est conçue pour que la variation de la géométrie ait lieu au moyen d'un déplacement transversal d'au moins une rouleau de l'unité d'extrusion.
